# FASCICULE DE BREVET EUROPEEN

(11) **EP 0 565 437 B1**
(45) Date de publication et mention de la délivrance du brevet: **12.06.1996**
(21) Numéro de dépôt: 93400895.4
(22) Date de dépôt: 06.04.1993
(51) Int. Cl.: B60S 1/38, B60S 1/32

(54) **Dispositif d'essuie-glace incorporant un déflecteur à lame souple amovible**
Windableiter für Scheibenwischvorrichtung mit abnehmbarer weicher Kante
Air deflector for a windscreenwiper with a supple detachable edge

(30) Priorité: 08.04.1992 FR 9204294
(43) Date de publication de la demande: 13.10.1993
(73) Titulaire: VALEO SYSTEMES D'ESSUYAGE, 78321 La Verrière (FR)
(72) Inventeur: Maubray, Daniel, F-92130 Issy-Les-Moulineaux (FR)
(74) Mandataire: Schrimpf, Robert

(56) Documents cités:
- EP-A- 0 226 013
- EP-A- 0 337 042
- DE-A- 3 637 348
- DE-A- 3 923 666
- FR-A- 2 642 715
- GB-A- 2 106 775

## Description

La présente invention concerne le domaine des essuie-glace destinés notamment aux véhicules automobiles.

Il est connu d'équiper les balais d'essuie-glace et/ou les bras d'essuie-glace de déflecteurs pour dévier l'écoulement des flux d'air sur le pare-brise d'un véhicule en vue d'éviter que le balai muni de sa raclette ne se soulève et ne s'écarte de la surface à essuyer à des vitesses élevées du véhicule.

Le déflecteur comporte à cet effet un profilé rigide qui crée un effort aérodynamique tendant à presser le balai contre la surface à essuyer.

Pour des raisons aérodynamiques, le bord libre du déflecteur doit être proche de la surface à essuyer mais ne doit pas venir racler celle-ci à des vitesses élevées du véhicule. Le profilé rigide, en générant un effort aérodynamique, se déforme sous l'action de contraintes mécaniques internes en se rapprochant de la surface à essuyer. Il est connu de munir le déflecteur de bourrelets souples destines a s interposer entre la surface a essuyer et le profilé rigide aux vitesses élevées, et empêcher ainsi que celui-ci ne racle le pare-brise.

Les bourrelets souples sont habituellement au nombre de deux, disposés au voisinage des extrémités axiales du déflecteur. Toutefois, il a été constaté par la Demanderesse qu'à des vitesses très élevées, ou en cas de fort vent de face, les bourrelets souples n'empêchent pas, dans certains cas, le profilé rigide de venir racler par sa partie médiane le pare-brise, avec le grave inconvénient de laisser sur celui-ci des traces noirâtres gênant la visibilité du conducteur.

D'autre part, les pare-brise de véhicules présentent des courbures très diverses et nécessitent dans chaque cas un déflecteur dont le profil est spécifique, entraînant chez les équipementiers la fabrication d'un grand nombre de modèles de profilés rigides.

On a proposé dans la publication FR-A-2 642 715 un dispositif d'essuie-glace comportant un bras d'essuie-glace et un balai d'essuie-glace porté par le bras d'essuie-glace, le balai comprenant une raclette destinée à essuyer un pare-brise de véhicule. Ce dispositif connu est muni d'un déflecteur comportant un profilé rigide apte à exercer un effort aérodynamique tendant à presser la raclette sur le pare-brise à des vitesses élevées du véhicule. Le déflecteur est apte à être muni de façon amovible d'au moins une lame souple propre à s'interposer entre le profilé rigide et le pare-brise auxdites vitesses élevées. Cette lame souple est portée par une pièce rigide fixée de façon amovible sur le déflecteur.

La présente invention a pour but un dispositif d'essuie-glace amélioré, qui soit notamment de construction moins coûteuse que les dispositifs connus.

L'invention propose pour cela un dispositif d'essuie-glace du type divulgué dans FR-A-2 642 715 et tel que tel que défini dans la revendication 1.

L'invention permet ainsi aux équipementiers de réduire le nombre de références de profilés rigides en réalisant des profilés standards, l'adaptation d'un profilé standard aux différents types de pare-brise se faisant avantageusement grâce à des lames souples de courbures diverses, correspondant chacune à un type de pare-brise, et beaucoup moins coûteuses à réaliser que le profilé rigide.

Avantageusement, la lame souple est clipsée sur le profilé rigide.

En variante, la lame souple est enfilée sur le profilé rigide.

De préférence, la lame souple s'étend sensiblement sur toute la longueur du bord avant du déflecteur.

Selon l'invention, le déflecteur comporte des premiers moyens de montage aptes à coopérer avec des seconds moyens de montage prévus sur la lame souple, en vue de retenir de façon amovible la lame souple sur le déflecteur.

Dans un premier mode de réalisation, les premiers moyens de montage comportent au moins un perçage prévu sur le profilé rigide, les seconds moyens de montage comportant au moins une languette propre à être insérée dans le perçage, ladite languette étant munie en extrémité d'un épanouissement susceptible de se déformer élastiquement pour franchir le perçage et retenir après franchissement du perçage la lame souple sur le profilé rigide.

Dans un deuxième mode de réalisation, les premiers moyens de montage comportent au moins une gorge prévue sur le bord avant du déflecteur, et les seconds moyens de montage comportent au moins une languette de profil complémentaire, propre à être insérée de façon amovible sur ladite gorge.

En variante, il peut s'agir d'au moins un épanouissement prévu sur le bord avant du déflecteur propre à s'engager de façon amovible dans au moins une gorge de profil complémentaire prévue sur la lame souple.

Selon l'invention, les premiers moyens de montage sont moulés de formation avec le profilé rigide, et les deuxièmes moyens de montage sont moulés de formation avec la lame souple.

Avantageusement, la lame souple comporte un canal longitudinal interne muni d'au moins un orifice débouchant en regard de la surface à essuyer, propre à être alimenté en fluide de nettoyage.

L'invention a également pour objet une lame souple prise isolément, propre à équiper un dispositif d'essuie-glace selon l'invention.

D'autres caractéristiques et avantages de l'invention apparaîtront à la lecture de la description détaillée qui va suivre, d'exemples de réalisation non limitatifs de l'invention, et au vu du dessin annexé sur lequel :
- la figure 1 est une vue schématique en élévation latérale d'un balai d'essuie-glace destiné à être équipé d'un déflecteur selon l'invention,
- la figure 2 est une vue schématique partielle en perspective d'un déflecteur conforme à un mode de réalisation de l'invention,
- la figure 3 est une vue schématique partielle en perspective d'une lame souple apte à être fixée de façon amovible sur un déflecteur conforme au mode de réalisation de la figure 2,
- la figure 3A est une vue en coupe transversale du déflecteur et de la lame souple conformes au mode de réalisation des figures 2 et 3, en position assemblée,
- la figure 4 est une vue schématique en perspective partielle d'un déflecteur et d'une lame souple conformes au mode de réalisation des figures 2 et 3, en position assemblée,
- la figure 5 est une vue partielle en perspective d'une variante de réalisation d'un déflecteur conforme au mode de réalisation de la figure 2,
- les figures 6A et 6B sont des vues schématiques en coupe transversale illustrant des variantes de réalisation d'assemblage de lame souple sur un déflecteur,
- la figure 7 est une vue en perspective partielle illustrant le montage du déflecteur et de la lame souple tels que représentés sur la figure 6A,
- la figure 8 est une vue schématique en coupe transversale d'un déflecteur conforme à un autre mode de réalisation de l'invention,
- la figure 8A est une vue schématique en coupe transversale d'une lame souple destinée à équiper un déflecteur tel que représenté sur la figure 8,
- la figure 8B est une vue schématique en coupe transversale partielle d'une variante de réalisation d'assemblage de la lame souple sur le déflecteur conforme au mode de réalisation des figures 8 et 8A,
- la figure 9 est une vue en perspective illustrant l'assemblage de la lame souple et du déflecteur tels que représentés sur les figures 8 et 8A,
- la figure 10 est une vue schématique en coupe transversale d'une variante de réalisation d'un déflecteur,
- la figure 10A est une vue en coupe transversale d'une variante de réalisation d'une lame souple destinée à équiper un déflecteur tel que représenté sur la figure 10,
- la figure 10B est une vue en coupe partielle illustrant l'assemblage du déflecteur et de la lame souple représentés sur les figures 10 et 10A,
- la figure 11 est une vue en perspective illustrant l'assemblage de la lame souple représentée sur la figure 10A sur le déflecteur représenté sur la figure 10.

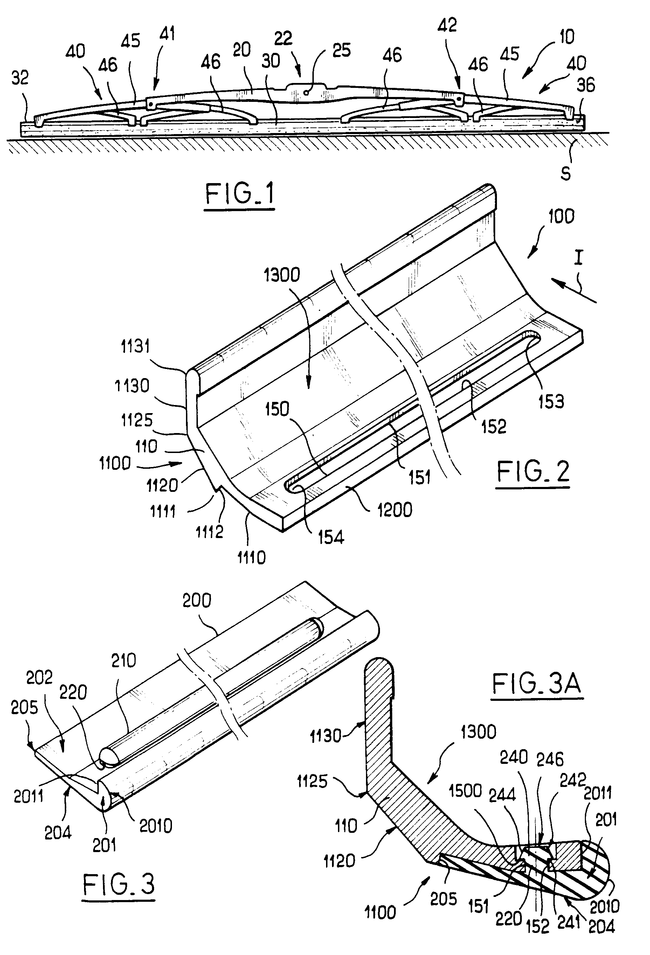

On a représenté sur la figure 1 un balai d'essuie-glace 10 connu en lui-même, propre à être équipé d'un déflecteur conforme à l'invention. Ce balai 10 comporte une armature 20, de forme allongée, ayant une section transversale en forme de "U" renversé, comprenant deux ailes latérales raccordées sur un dos. L'armature 20 est destinée à être portée, de façon connue, par un bras d'essuie-glace non représenté. A cet effet, le dos est généralement ajouré dans une région médiane 22 de l'armature 20, et l'armature 20 porte à ce niveau un tourillon transversal 25 s'étendant entre les ailes.

Ce tourillon 25 est destiné à être reçu dans un logement correspondant prévu à l'extrémité du bras d'essuie-glace, pour assurer une liaison articulée entre le bras et l'armature 20.

Le balai 10 comporte, en outre, une raclette 30 généralement en matière élastomère, propre à venir au contact d'une surface à essuyer S.

Cette raclette 30 est portée par un système de palonniers 40, montés sur des articulations 41, 42 prévues aux extrémités de l'armature 20. Avantageusement, comme représenté, le système de palonniers 40 comprend un palonnier intermédiaire 45 portant, à chaque extrémité, de façon articulée, deux palonniers secondaires 46.

Le balai 10 est avantageusement équipé d'un déflecteur conforme à l'invention. Pour ce faire, il est prévu des moyens de montage du déflecteur sur l'armature, connus et non représentés.

On a représenté, sur les figures 2 à 11, diverses réalisations de déflecteurs et de lames souples amovibles conformes à l'invention.

Dans toutes ces réalisations, le déflecteur est référencé 100, la lame souple 200.

Le déflecteur 100 présente, d'une façon générale, une forme allongée dans une direction longitudinale, perpendiculaire au plan des vues en coupe transversale des figures 3A, 6A, 6B, 8, 10.

Le déflecteur 100 comporte un profilé rigide 110 ayant une forme sensiblement convexe tournée vers la surface à essuyer, adaptée à dévier les flux d'air en vue d'exercer un effort aérodynamique tendant à presser le balai contre la surface à essuyer. De préférence, la distance entre le déflecteur et la surface à essuyer est suffisamment réduite pour créer un effet de sol produisant une dépression sous le profilé 110.

Avantageusement, dans tous les modes de réalisation décrits, la lame souple 200 s'étend sur toute la longueur du profilé 110.

La surface interne 1100 en regard de la surface à essuyer, globalement convexe, du profilé rigide 110 peut se décomposer d'une manière générale en trois zones :
- une zone avant 1110 sensiblement plane s'étendant à partir d'un bord avant 1200 vers l'arrière, c'est-à-dire vers la raclette du balai, non représentée sur la figure 2 ;
- une zone intermédiaire 1120 plane, inclinée vers le haut par rapport à la zone avant, c'est-à-dire en éloignement de la surface à essuyer ;
- une zone arrière 1130 sensiblement plane, qui se raccorde sur la zone intermédiaire 1120 par une arête saillante 1125 et fait un angle voisin de 90° avec la zone avant 1110.

Conformément à un mode de réalisation de l'invention, les zones avant 1110 et intermédiaire 1120 présentent au niveau de leur jonction un épaulement 1111. Cet épaulement 1111 comporte un flanc 1112 sensiblement perpendiculaire au plan de la zone avant 1110.

Comme il a été dit précédemment, le déflecteur 100 est muni de moyens de montage sur l'armature 20 d'essuie-glace. Ces moyens consistent par exemple à prolonger la zone arrière 1130 par des jambes de liaison non représentées, munies de pinces pouvant se clipser sur l'armature 20, les jambes se raccordant à angle droit sur la zone arrière 1130, à son extrémité supérieure 1131. On peut également proposer une fixation par boulonnage ou rivetage du déflecteur sur l'armature 20.

La surface externe 1300, opposée à la surface 1100 est de forme globalement concave, tournée vers la direction d'incidence des flux d'air à dévier, schématisée par la flèche I de la figure 2.

Le bord avant 1200 sur lequel se raccordent les surfaces interne 1100 et externe 1300, est plan, et s'étend sensiblement perpendiculairement à la zone avant 1110.

Conformément à une caractéristique de l'invention, le déflecteur 100 porte des premiers moyens de montage adaptés à coopérer de façon amovible avec des deuxièmes moyens de montage portés par une lame souple 200.

Dans un mode de réalisation de l'invention représenté sur les figures 2 et 3A, les premiers moyens de montage comprennent un perçage 150 oblong s'étendant sur une grande partie de la longueur de la zone avant 1110 du profilé rigide 110 et débouchant sur les surfaces interne 1100 et externe 1300.

Le perçage 150 présente une partie inférieure débouchant sur la surface interne 1100 comportant deux flancs longitudinaux 151 et 152 s'étendant parallèlement au bord avant 1200, reliés à leurs extrémités par deux flancs en forme de demi-cylindre 153 et 154, et une partie supérieure débouchant sur la face 1300, élargie par rapport à la partie inférieure et se raccordant par une surface étagée 1500 sur celle-ci.

Dans l'exemple de réalisation des figures 3 et 3A, la lame souple 200 présente une forme générale aplatie, comportant deux faces sensiblement planes 202, 204 divergeant en éloignement d'un bord libre plan 205, et se raccordant, à l'opposée de ce bord libre 205, sur un bourrelet 201 de plus grande épaisseur. Le bourrelet 201 présente, dans un plan transversal, une section au contour arrondi convexe 2010, qui se raccorde tangentiellement sur la face 204, ce contour comprenant en outre une portion droite 2011 qui s'étend sensiblement à angle droit du plan de la face 202.

Le bord libre plan 205 s'étend sensiblement perpendiculairement au plan de la face 204.

Conformément à l'invention, la lame souple 200 comporte, sur sa face 202, des seconds moyens de montage adaptés à coopérer avec le perçage 150 prévu sur le déflecteur 100.

En se reportant au mode de réalisation des figures 3 et 3A, on voit que les seconds moyens de montage consistent en une languette 210 comprenant un tronc 220 d'épaisseur constante, raccordé perpendiculairement par sa base sur la face 202. L'épaisseur du tronc 220 est inférieure ou égale à la distance entre les flancs longitudinaux 151 et 152 du perçage 150.

Le tronc 220 se raccorde à une extrémité opposée à sa base à un épanouissement 240 qui s'étend symétriquement de part et d'autre de celui-ci, sur une distance totale supérieure à la distance entre les flancs longitudinaux 151 et 152.

L'épanouissement 240 présente, au niveau de la jonction avec le tronc 220, une surface de retenue 241 disposée parallèlement en regard de la face 202. L'épanouissement 240 est en outre bordé longitudinalement par deux faces longitudinales obliques 242, 244 convergeant en éloignement de la base du tronc 220 et raccordées sur un dos 246.

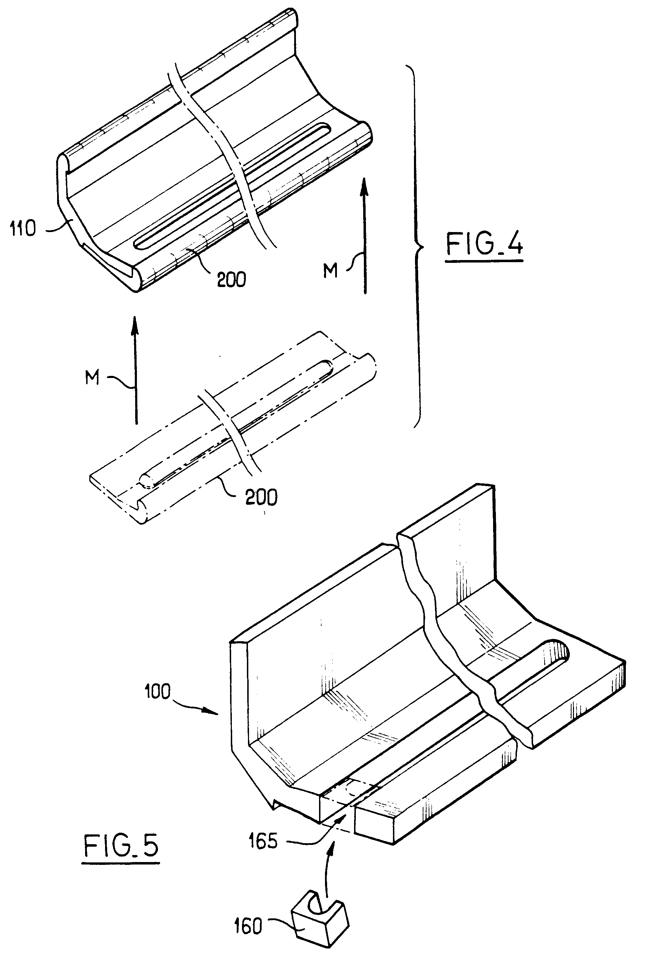

Pour mettre en place la lame 200 dans le perçage 150, on commence par placer la face 202 en regard de la surface interne 1100, puis la languette 210 est pressée à l'intérieur du perçage 150, selon les flèches M de la figure 4.

Lors de cette introduction, les faces longitudinales obliques 242, 244 de l'épanouissement 240 participent au centrage de la languette contre les bords longitudinaux du perçage 150, puis l'épanouissement 240 se comprime élastiquement pour franchir le perçage 150.

La distance entre la face 202 et la surface de retenue 241 correspond à l'épaisseur de la partie inférieure du perçage 150, de sorte que lorsque l'épanouissement 240 reprend sa forme initiale après franchissement du perçage 150, il s'applique par sa surface de retenue 241 contre la surface étagée 1500 et retient de façon amovible la lame souple 200 sur le déflecteur 100. De préférence, comme représenté, la distance entre le dos 146 et la surface de retenue 241 est inférieure à l'épaisseur de la partie supérieure du perçage 150 de sorte que la languette 210 soit noyée dans le corps du profilé 110 et ne perturbe pas l'écoulement des flux d'air sur la surface externe 1300.

On remarque à l'examen de la figure 4 que le bord libre 205 de la lame souple 200 s'applique contre le flanc 1112 de l'épaulement 1111, de sorte que le déflecteur 100 équipé de sa lame souple 200 présente une surface interne lisse, améliorant ainsi l'écoulement de l'air sous le déflecteur.

Avantageusement, comme représenté, la surface générée par la portion plane 2011 du contour du bourrelet 201 s'appuie sur le bord avant 1200 de sorte que la face externe 1300 du déflecteur se raccorde tangentiellement sur la surface générée par la portion arrondie 2010 du contour du bourrelet 201, toujours dans le but d'améliorer l'écoulement des flux d'air.

Bien entendu, conformément à une caractéristique de l'invention, la lame souple 200 est montée de façon amovible sur le profilé 100. Dans le mode de réalisation de l'invention qui vient d'être décrit, la lame souple 200 peut être retirée par simple traction dans une direction opposée aux flèches M de la figure 4, de préférence en partant d'une extrémité axiale de la lame souple. Lors du retrait de la lame souple 200, l'épanouissement 240 franchit de nouveau le perçage 150 mais plus difficilement que lors de l'introduction, ce qui assure une bonne tenue mécanique du montage de la lame souple 200 sur le déflecteur 100.

Dans une variante de réalisation, on peut proposer d'avoir un perçage 150 débouchant latéralement sur un côté du déflecteur 100, comme illustré sur la figure 5.

La lame souple 200 est alors enfilée par ce côté dans le perçage au lieu d'être clipsée dans celui-ci, et après insertion de la lame, on referme le perçage 150 en rapportant un élément de fermeture 160, pour aboutir à un déflecteur conforme au mode de réalisation de l'invention qui vient d'être décrit.

L'élément de fermeture 160 peut être encliqueté ou collé sur le profilé 110. La lame souple 200 peut être retirée en enlevant d'abord l'élément de fermeture 160 puis en faisant coulisser la lame 200 hors du perçage 150 ; on peut également proposer de ne pas toucher à l'élément de fermeture 160 et de retirer la lame 200 comme précédemment évoqué en référence à la figure 4.

Dans le cas où l'élément de fermeture 160 est fixé de façon inamovible sur le profilé rigide 110, une nouvelle lame souple 200 peut être montée par clipsage sur le déflecteur 100 conformément au mode de réalisation décrit en référence aux figures 2 à 4.

Le mode de réalisation de l'invention qui vient d'être décrit n'est nullement limitatif et l'on peut proposer de monter une lame souple 200 sur un profilé rigide 110 de nombreuses autres manières, le déflecteur 100 et la lame soupe 200 pouvant présenter des géométries diverses.

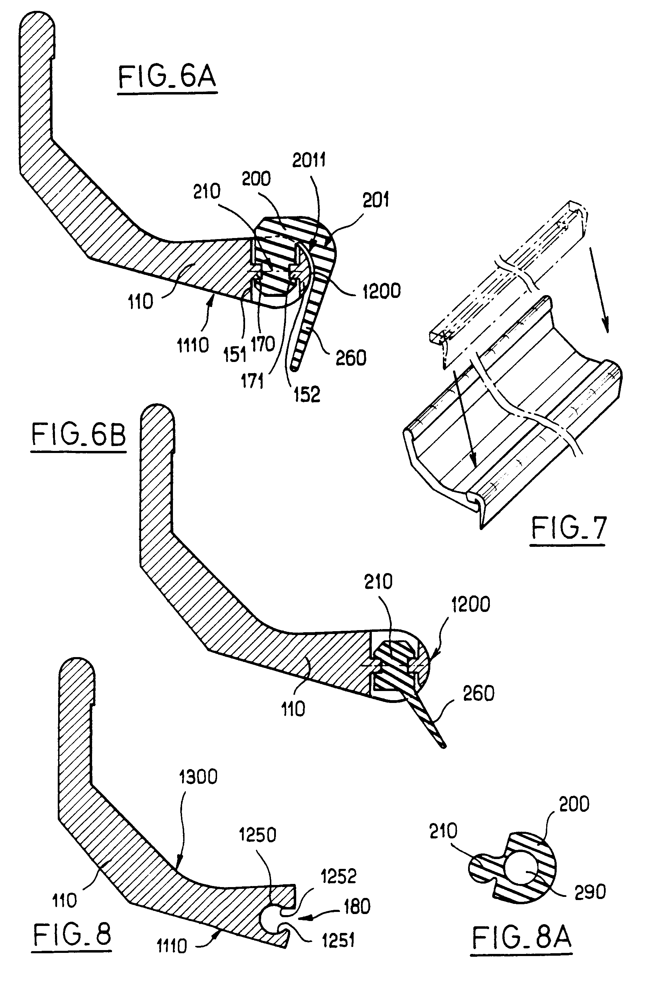

Par exemple, comme illustré schématiquement sur les vues en coupe des figures 6A et 6B, on peut proposer une liaison de type glissière entre une lame souple 200 et un profilé 110.

Sur la figure 6A, les premiers moyens de montage comprennent un perçage 150 comportant dans le sens de sa longueur, deux rainures de guidage 170, 171 disposées en regard l'une de l'autre, en saillie par rapport aux flancs longitudinaux 151 et 152 du perçage 150.

La lame souple 200 comporte des seconds moyens de montage comprenant une languette 210 agencée de façon à coopérer avec les rainures de guidage 170, 171, et il est prévu à cet effet sur la languette 210 deux cannelures longitudinales dont le profil est complémentaire du profil des rainures de guidage 170, 171.

De préférence, on prévoit de faire déboucher le perçage 150 sur un côté du déflecteur, conformément à la figure 5, pour faire coulisser la lame souple dans les rainures longitudinales 170, 171.

En variante, la languette 210 peut être introduite comme montré sur la figure 7 par clipsage dans le perçage 150 d'une façon analogue au clipsage de la lame souple 200 dans le perçage 150 du mode de réalisation du déflecteur décrit en référence à la figure 4.

Le profilé rigide 110 est représenté sur les figures 6A et 6B avec un bord avant 1200 arrondi, convexe vers l'extérieur.

Dans l'exemple de la figure 6A, la lame souple 200 comporte une partie bombée 201, sur laquelle se raccorde une languette 210. Avantageusement, la partie bombée 201 présente une face interne 2011 dont le profil est complémentaire du bord avant 1200 du profilé.

La partie bombée 201 épouse ainsi le bord avant 1200 et se prolonge en direction de la surface à essuyer par une partie effilée 260 susceptible de s'interposer entre le profilé rigide 110 et la surface à essuyer. La partie effilée 260 fait un angle avec la zone avant 1110, et peut, par exemple, ainsi qu'illustré sur la figure 6, être orientée vers l'arrière.

En variante, la partie effilée 260 peut se raccorder directement sur la languette 210 enfilée dans le perçage 150 prévu sur le déflecteur, et être orientée vers l'avant, comme cela est représenté sur la figure 6B.

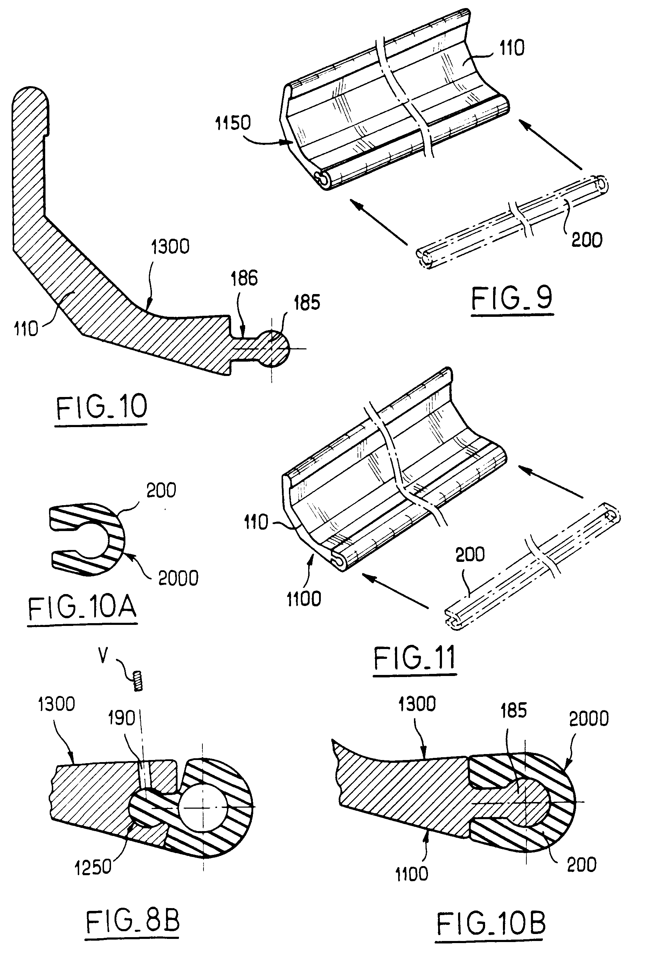

Si l'on se réfère maintenant aux figures 8, 8A et 9 qui illustrent un autre mode de réalisation de l'invention, on remarque que le bord avant 1200 est muni d'une gorge longitudinale 1250 s'étendant le long du profilé rigide 110 à partir d'une extrémité latérale 1150 sur toute la longueur du profilé ou jusqu'au voisinage de l'autre extrémité latérale, pour former une glissière de guidage 180. On remarque à l'examen de la figure 8 que la gorge 1250 comporte deux faces 1251, 1252 divergeant en éloignement de l'ouverture de la gorge 1250, de façon à pouvoir retenir dans la gorge 1250 une languette 210 de profil complémentaire, portée par une lame souple 200 telle que représentée sur la figure 8A. La languette 210 peut être clipsée dans la gorge 1250 comme représenté sur la figure 9 ou enfilée par l'extrémité latérale 1150.

Avantageusement, il est prévu des moyens pour bloquer en translation la lame souple 200 dans la glissière 180. Ces moyens consistent par exemple à prévoir au moins un alésage 190 sur la face externe 1300, débouchant dans la gorge 1250.

Une vis V est alors introduite dans l'alésage 190 et vient en prise avec la languette 210 en vue d'immobiliser celle-ci, de façon amovible, dans la glissière 180.

En se référant à la figure 10, on voit que dans une autre variante de réalisation de l'invention, le bord avant 1200 est muni d'un épanouissement 185 s'étendant de préférence sur toute la longueur du profilé 110, propre à s'engager de façon amovible dans une lame souple 200.

L'épanouissement 185 se raccorde sur le reste du profilé 110 par une section de moindre épaisseur 186.

La lame souple 200 présente une section dont le profil est en forme de "C", complémentaire de celui de l'épanouissement 185. La surface externe 2000 de la lame 200 se raccorde de préférence, comme représenté sur la figure 10B, tangentiellement aux surfaces interne 1100 et externe 1300 proches du bord avant 1200, de façon à perturber le moins possible l'écoulement des flux d'air sur ces surfaces. Il est avantageusement prévu des moyens de blocage en translation de la lame souple engagée sur le bourrelet 185. Il s'agit par exemple d'un ou plusieurs évidements, non représentés, prévus sur la surface externe de l'épanouissement 185 et de picots portés par la lame 200, en saillie sur la surface interne de la lame souple 200, adaptés à s'engager dans ces évidements.

Selon l'invention, la lame 200 est avantageusement munie d'un canal longitudinal interne 290, représenté à titre d'exemple sur la figure 8A, muni d'orifices non représentés débouchant en regard de la surface à essuyer, pour l'arrosage de celle-ci. Le canal 290 est propre à être relié à un tuyau d'alimentation, non représenté, en fluide de nettoyage.

Dans tous les modes de réalisation qui viennent d'être décrits, le déflecteur 100 est avantageusement moulé d'une seule pièce dans un matériau rigide. De même, la lame souple 200 est avantageusement moulée d'une seule pièce dans un matériau souple, de préférence une matière élastomère.

On peut également proposer, sans sortir du cadre de l'invention, de munir le déflecteur de plusieurs lames souples 200, montées en alignement l'une de l'autre ou disposées côte à côte.

## Revendications

1. Dispositif d'essuie-glace comportant un bras d'essuie-glace et un balai (10) d'essuie-glace porté par le bras d'essuie-glace, le balai comprenant une raclette (30) destinée a essuyer un pare-brise de véhicule, ledit dispositif étant muni d'un déflecteur (100) comportant un profilé rigide (110) apte à exercer un effort aérodynamique tendant à presser la raclette (30) sur le pare-brise à des vitesses élevées du véhicule, le déflecteur (100) étant apte à être muni de façon amovible d'au moins une lame souple (200) propre à s'interposer entre le profilé rigide (110) et le pare-brise auxdites vitesses élevées grâce à des premiers moyens de montage moulés de formation avec le profilé rigide, aptes à coopérer avec des seconds moyens de montage de la lame souple (200) sur le déflecteur (100), caractérisé en ce que les seconds moyens de montage sont moulés de formation avec la lame souple (200) et dans le même matériau que cette dernière, en vue de retenir de façon amovible la lame souple (200) sur le déflecteur.

2. Dispositif d'essuie-glace selon la revendication 1, caractérisé en ce que la lame souple (200) s'étend sensiblement sur toute la longueur du bord avant (1200) du déflecteur (100).

3. Dispositif d'essuie-glace selon la revendication 1 ou 2, caractérisé en ce que la lame souple (200) est clipsée sur le profilé rigide (110).

4. Dispositif d'essuie-glace selon l'une des revendications 1 à 3, caractérisé en ce que la lame souple (200) est enfilée sur le profilé rigide (110).

5. Dispositif d'essuie-glace selon l'une des revendications 1 à 3, caractérisé en ce que les premiers moyens de montage comportent au moins un perçage (150) prévu sur le profilé rigide, et en ce que les seconds moyens de montage comportent au moins une languette (210) propre à être insérée dans le perçage, ladite languette (210) étant munie en extrémité d'un épanouissement (240) susceptible de se déformer élastiquement pour franchir le perçage (150) et retenir après franchissement du perçage (150) la lame souple (200) sur le profilé rigide (110).

6. Dispositif d'essuie-glace selon l'une des revendications 1 à 5, caractérisé en ce que les premiers moyens de montage comportent au moins une gorge (180) prévue sur le bord avant (1200) du déflecteur, et les seconds moyens de montage comportent au moins une languette (210) de profil complémentaire, propre à être insérée de façon amovible dans ladite gorge.

7. Dispositif d'essuie-glace selon l'une des revendications 1 à 6, caractérisé en ce que les premiers moyens de montage comportent au moins un épanouissement (185) prévu sur le bord avant (1200) du déflecteur (100) propre à s'engager de façon amovible dans au moins une gorge de profil complémentaire prévue sur la lame souple (200).

8. Dispositif d'essuie-glace selon l'une des revendication 1 à 7, caractérisé en ce que la lame souple (200) comprend un canal longitudinal interne (290) muni d'au moins un orifice débouchant en regard de la surface à essuyer, propre à être alimenté en fluide de nettoyage.

9. Lame souple propre à équiper un déflecteur pour former un dispositif d'essuie-glace selon l'une des revendications 1 à 8.

## Claims

1. A windscreen wiper device including a windscreen wiper arm and a wiper blade (10) carried on the windscreen wiper arm, the wiper blade including a scraper (30) intended for wiping a vehicle windscreen, said device being provided with a deflector (100) comprising a rigid bar (110) suitable for exerting an aerodynamic force tending to press the scraper (30) onto the windscreen at high vehicle speeds, the deflector (100) being suitable for being provided with at least one removable flexible blade (200) suitable for being interposed between the rigid bar (110) and the windscreen at said high speeds by first mounting means moulded integrally with the rigid bar and suitable for cooperating with second mounting means for mounting the flexible blade (200) on the deflector (100), the device being characterized in that the second mounting means are moulded integrally with the flexible blade (200) and are made of the same material as the flexible blade, so as to removably retain the flexible blade (200) on the deflector.

2. A windscreen wiper device according to claim 1, characterized in that the flexible blade (200) extends over substantially the entire length of the front edge (1200) of the deflector (100).

3. A windscreen wiper device according to claim 1 or claim 2, characterized in that the flexible blade (200) is clipped onto the rigid bar (110).

4. A windscreen wiper device according to any of claims 1 to 3, characterized in that the flexible blade (200) is threaded onto the rigid bar (110).

5. A windscreen wiper device according to any of claims 1 to 3, characterized in that the first mounting means comprise at least one hole (150) provided in the rigid bar, and that the second mounting means comprise at least one tongue (210) suitable for being inserted in the hole, the end of said tongue (210) being provided with an extension (240) which is capable of resilient deformation so as to pass through the hole (150) and thereafter retain the flexible blade (200) on the rigid bar (110).

6. A windscreen wiper device according to any of claims 1 to 5, characterized in that the first mounting means comprise at least one groove (180) provided on the front edge (1200) of the deflector, and in that the second mounting means comprise at least one tongue (210) of complementary profile, suitable for being removably inserted in said groove.

7. A windscreen wiper device according to any of claims 1 to 6, characterized in that the first mounting means comprise at least one extension (185) provided on the front edge (1200) of the deflector (100), suitable for being removably engaged in at least one groove of complementary profile provided on the flexible blade (200).

8. A windscreen wiper device according to any of claims 1 to 7, characterized in that the flexible blade (200) includes a longitudinal internal duct (290) provided with at least one orifice which emerges facing the surface to be wiped, and which is suitable for being supplied with cleaning fluid.

9. A flexible blade suitable for being fitted to a deflector to form a windscreen wiper device according to any of claims 1 to 8.

## Patentansprüche

1. Scheibenwischvorrichtung, die aus einem Scheibenwischerarm und einem Scheibenwischerblatt (10) besteht, das an dem Scheibenwischerarm angebracht ist, wobei das Scheibenwischerblatt einen Wischergummi (30) für das Wischen der Windschutzscheibe eines Kraftfahrzeugs umfaßt, wobei die besagte Vorrichtung mit einem Windableiter (100) versehen ist, der ein starres Profil (110) umfaßt, das einen aerodynamischen Druck ausüben kann, um den Wischergummi (30) bei hohen Fahrgeschwindigkeiten des Fahrzeugs an die zu wischende Fläche zu pressen, wobei der Windableiter (100) abnehmbar mit wenigstens einer weichen Kante (200) versehen werden kann, die sich bei den besagten hohen Fahrgeschwindigkeiten zwischen das starre Profil (110) und die Windschutzscheibe einfügen kann, wozu erste Montagemittel vorgesehen sind, die einstückig an dem starren Profil angeformt sind und mit zweiten Montagemitteln für die Anbringung der weichen Kante (200) am Windableiter (100) zusammenwirken können , **dadurch gekennzeichnet,** daß die zweiten Montagemittel einstückig an der weichen Kante (200) aus dem gleichen Material wie diese angeformt sind, um die weiche Kante (200) abnehmbar am Windableiter zu haltern.

2. Scheibenwischvorrichtung nach Anspruch 1 , **dadurch gekennzeichnet,** daß sich die weiche Kante (200) in etwa über die gesamte Länge der Vorderkante (1200) des Windableiters (100) erstreckt.

3. Scheibenwischvorrichtung nach Anspruch 1 oder 2, **dadurch gekennzeichnet,** daß die weiche Kante (200) auf das starre Profil (110) aufgeklemmt wird.

4. Scheibenwischvorrichtung nach einem der Ansprüche 1 bis 3 , **dadurch gekennzeichnet**, daß die weiche Kante (200) auf das starre Profil (110) aufgeschoben wird.

5. Scheibenwischvorrichtung nach einem der Ansprüche 1 bis 3 , **dadurch gekennzeichnet**, daß die ersten Montagemittel wenigstens eine Bohrung (150) umfassen, die an dem starren Profil vorgesehen ist, und daß die zweiten Montagemittel wenigstens eine Leiste (210) umfassen, die in die Bohrung eingesetzt werden kann, wobei die besagte Leiste (210) endseitig mit einer Ausstülpung (240) versehen ist, die sich elastisch verformen kann, um durch die Bohrung (150) hindurchzugehen und nach dem Durchgang durch die Bohrung (150) die weiche Kante (200) an dem starren Profil (110) zu haltern.

6. Scheibenwischvorrichtung nach einem der Ansprüche 1 bis 5 , **dadurch gekennzeichnet**, daß die ersten Montagemittel wenigstens eine Auskehlung (180) umfassen, die an der Vorderkante (1200) des Windableiters vorgesehen ist, und daß die zweiten Montagemittel wenigstens eine Leiste (210) mit dazu passendem Profil umfassen, die abnehmbar in die besagte Auskehlung eingesetzt werden kann.

7. Scheibenwischvorrichtung nach einem der Ansprüche 1 bis 6 , **dadurch gekennzeichnet**, daß die ersten Montagemittel wenigstens eine Ausstülpung (185) umfassen, die an der Vorderkante (1200) des Windableiters (100) vorgesehen sind und abnehmbar in wenigstens eine Auskehlung mit dazu passendem Profil eingreifen kann, die an der weichen Kante (200) vorgesehen ist.

8. Scheibenwischvorrichtung nach einem der Ansprüche 1 bis 7 , **dadurch gekennzeichnet**, daß die weiche Kante (200) einen inneren Längskanal (290) umfaßt, der mit wenigstens einer Öffnung versehen ist, die gegenüber der zu wischenden Fläche mündet und der eine Waschflüssigkeit zugeleitet werden kann.

9. Weiche Kante, mit der ein Windableiter bestückt werden kann, um eine Scheibenwischvorrichtung nach einem der Ansprüche 1 bis 8 zu bilden.
